# EUROPEAN PATENT APPLICATION

(11) **EP 0 734 830 A2**
(43) Date of publication of application: **02.10.1996**
(21) Application number: 96104034.2
(22) Date of filing: 14.03.1996
(51) Int. Cl.: B29C 44/46

(54) **Frothing device for polyurethane mixtures**

(30) Priority: 31.03.1995 IT MI950661
(71) Applicant: CANNON S.P.A., 20090 Trezzano S/N (Milan) (IT)
(72) Inventor: Locatelli, Fiorangela, 21047 Saronno (Varese) (IT)
(74) Representative: Coloberti, Luigi

(57) **Abstract**

A frothing device for delivering pre-expanded polyurethane mixtures. The device comprises a tubular gate bar (16) for distributing the mixture, provided with a longitudinal slot (18) which extends transversely and in the direction of the flow, towards a diffuser (19) comprising a pre-expansion cavity for the mixture, defined by a series of differently oriented walls (20 - 25) to cause at least one flow deviation of the polyurethane mixture emerging from the slot (18) of the distribution bar (16). The slot (18) of the distribution bar (16) has moreover slanted edges (28, 29 - fig. 3) which diverge in the flow direction and towards the pre-expansion cavity of the diffuser (19).

## Description

The present invention relates to a device for providing frothed or pre-expanded polyurethane mixtures in the continuous production of rigid and flexible polyurethane foams, particularly for the production of flexible foam slab stocks, or rigid foam panel production.

The continuous production of pre-expanded polyurethane foams is becoming widespread in many sectors, on account of the advantage of using CO₂ or some other inert low-boiling blowing agent which is made possible by the known frothing technique compared to conventional foaming processes.

The frothing technique or pre-expansion by means of a low-boiling agent, although simple in general terms, in practice is difficult to implement, since it is necessary to create suitable conditions for pre-expansion and distribution of the polyurethane mixture which avoid turbulence phenomena and make it possible to obtain polyurethane foams having a homogeneous cell structure, devoid of bubbles, pin-holes and defects.

In order to solve these problems by EP-A- 0 645 226 published on 29.03.1995 it has been proposed to use a special lay-down device for frothing and distribution of the polyurethane mixture, consisting in a tubular gate bar having a longitudinal slot which extends transversely to and in the flow direction of the mixture, opening out towards the cavity of a diffuser delimited by a series of side walls oriented in different directions so as to deviate the flow of the pre-expanding mixture as it emerges from the slot of the distribution or gate bar.

In such an arrangement, the height and the width of the slot in the distribution bar must be suitably calculated and provided so as to create, inside the same gate bar and a mixing apparatus upstream of the frothing device, mixing conditions which enable the low-boiling blowing agent, for example liquid CO₂, to be kept in the liquid state while it is being mixed with the polyurethane components and the resulting mixture is flowing to the frothing device; furthermore, in a frothing device of the kind mentioned, release of the blowing agent and the frothing of the mixture in the diffuser must take place in a homogeneous and controlled manner so as to avoid possible causes of turbulence in the polyurethane mixture while it is expanding.

Since, when calculating the dimensions of the slot, it is necessary to take into account both the pressure required inside the mixing chamber and the gate bar to keep the blowing agent in a liquid state, as well as the throughput of the same mixing apparatus, it has been established that, in certain cases, particularly for high throughputs, the foam emerges from the diffuser with a turbulent flow causing an irregular cell structure owing to the presence of bubbles and large cavities.

All this depends on irregular frothing which can be attributed to an excessive speed in the flow of the mixture emerging from the distribution bar.

After various attempts to modify the ratios between the dimensions of the slot in the distribution bar, by changing also the shape and the size of the diffuser cavity, it was found that a significant improvement was obtainable by widening the slot near the edge where the mixture emerges towards the diffuser cavity. By working in such direction, in order to obtain a device for the distribution of a pre-expanded polyurethane mixture with improved features, able to provide homogeneous mixture lay-down conditions and obtain bubble free polyurethane foams and of a commercially acceptable quality, within a wide range of throughput values of the mixing apparatuses, according to the present invention it has been found that this object can be achieved by means of a frothing device for supplying a pre-expanded polyurethane mixture, having the features of claim 1.

In particular the device comprises a tubular gate bar for distributing the mixture in a cross-wise direction of a moving substrate, defining an elongated pressure equalizing chamber suitably connected to a mixing apparatus for mixing polyurethane components, in which the gate bar is provided on one side with a longitudinal slot having side surfaces which extend transversely to the substrate and in the flow direction of the mixture, towards the cavity of a diffuser comprising a series of differently oriented walls so as to deviate the flow of the pre-expanding polyurethane mixture from the gate bar towards an outlet opening of the same diffuser; this gate bar is characterized in that the slot, at the edge opposite to the pressure equalizing chamber, comprises one or both of its longitudinal side surfaces suitably slanted and diverging in the flow direction, towards the diffuser cavity.

In particular it has been found that, in order to obtain good laminar flow conditions, so to avoid critical turbulence conditions in the mixture emerging from the slot of the distribution bar, it is advantageous to maintain very small diverging angles of the slot side surfaces, such that the length of the diverging portion is equal to or greater than four or five times the height of the same slot at the extreme point of its maximum divergency.

Preferably, the slot has an initial portion of smaller height, delimited by parallelly arranged planar walls, followed by the diverging portion. The ratio between the dimensions and the lengths of the two parallel and diverging portions of the slot can vary from case to case and in general the diverging portion can be limited to the end part of the outlet edge of the said slot.

Finally, as regards their mutual arrangement, the end diverging portion of the slot can be axially aligned with the initial portion of the slot having a constant height, or the two parts of the slot may form any angle with respect to one another.

The general features of the frothing device for supplying pre-expanded polyurethane mixtures according to the invention, as well as different embodiments as regards the shape and arrangement of the diverging portion of the slot in the distribution bar, will be illustrated in greater detail hereinbelow, with reference to the accompanying drawings, in which:
Fig. 1 is a top view of a plant for the continuous production of flexible polyurethane foams, which uses the frothing device according to the present invention;
Fig. 2 is an enlarged sectional view of the device, along the line 2-2 of Figure 1;
Fig. 3 is a detail, on a larger scale, of the device according to Figure 2;
Fig. 4 shows a detail similar to that of the preceding figure, with regard to a second embodiment;
Fig. 5 shows the detail of a third embodiment of the device according to the invention.
Fig. 6 is a longitudinal sectional view through a second plant for the continuous production of laminated panels, with rigid polyurethane foams, which uses the frothing device according to the invention.

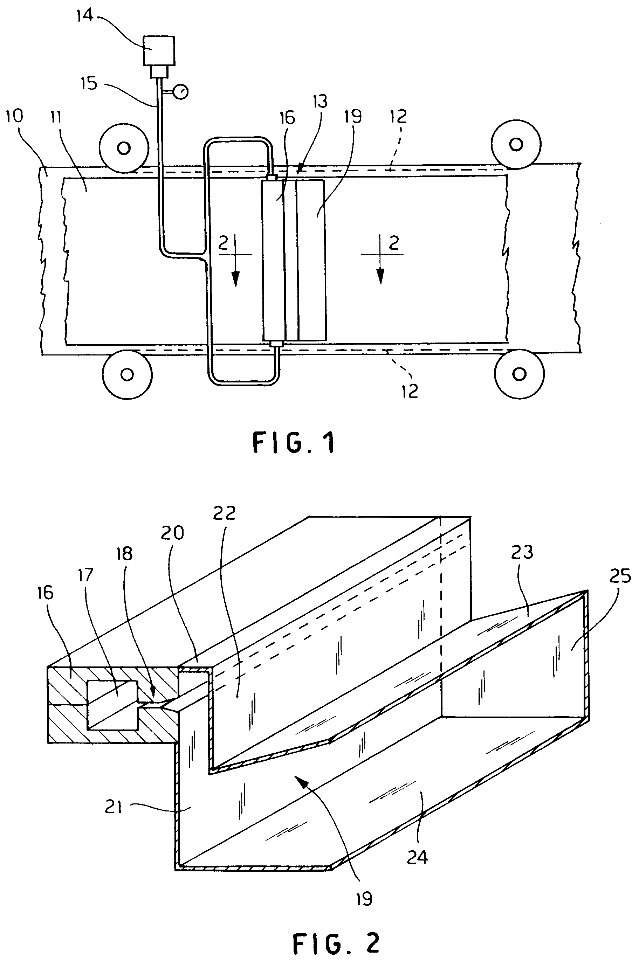

The essential features of the invention will now be described hereinbelow with reference to a plant for the continuous production of flexible polyurethane foams, schematically shown in Figure 1. The plant substantially comprises a conveyor 10 on which a continuous paper sheet 11 is fed, said sheet constituting a moving substrate on which a continuous mattress of expanded polyurethane foam is formed, said foam being then cut into blocks or slab-stocks of predetermined length. Continuous sheets of paper 12 are arranged on both the sides along a section of the conveyor 10 in order to retain the polyurethane foam during the expansion phase.

Above the conveyor 10 and the moving substrate 11 there is provided a lay-down device 13 for supplying and pre-expanding or frothing a polyurethane mixture obtained from reactive polyurethane components and from a low boiling blowing agent, such as CO₂, which are mixed in the liquid state inside a high-pressure mixing apparatus 14 connected to the foaming device 13 via a conduit 15.

In a manner known per se, the reactive polyurethane components are fed into the chamber of the mixing apparatus 14 in the stoichiometrically determined quantities, together with any additives as well as a metered quantity of liquid CO₂ or other inert blowing agent which must be mixed with the polyurethane components under high pressure conditions so as to guarantee that mixing of the CO₂ or blowing agent occurs in the liquid phase, preventing frothing from occurring in a sudden and uncontrolled manner.

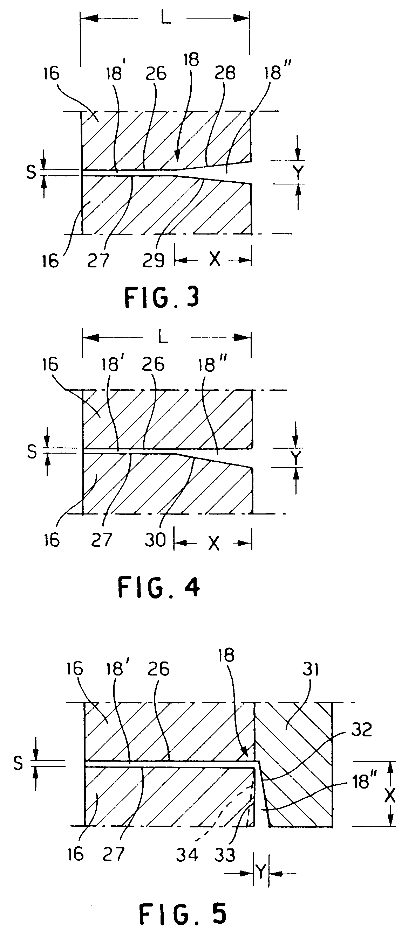

Control of the frothing process and correct pressure of the mixing operation inside the mixing apparatus 14 can be obtained by means of a frothing device, having the features according to the invention, an embodiment thereof is shown in Figures 2 and 3 of the accompanying drawings.

The frothing device substantially comprises a tubular gate bar 16 for distributing the mixture, defining an elongated pressure-equalizating chamber 17 suitably connected to the pipe 15 for feeding the polyurethane mixture to be supplied.

The gate bar 16 has on one of its sides a longitudinal slot 18 which opens out towards the cavity of a diffuser 19 inside which the flow of the polyurethane mixture is deviated one or more times while frothing by gradual and controlled release of the liquid CO₂.

As can be noted from the enlarged section shown in Figure 2, the diffuser 19 comprises a series of side walls 20, 21, 22, 23, 24 and 25 oriented in different directions defining a shaped cavity so as to deviate the direction of the flow of the mixture from the slot 18 towards the front mouth opening of the said diffuser 19. In the present case, the diffuser 19 is shaped to cause a double angled deviation of the flow of the expanding mixture; however, it is obvious that the shape and the size of the diffuser may vary or be modified with respect to that shown.

In accordance with the innovative features of the present invention, as shown in detail in Figure 3, the slot 18, extending from the pressure equalization chamber 17 of the gate bar, comprises a first portion 18' of constant height S, delimited by two planar wall surfaces 26, 27 parallelly arranged to each other and to the cross axis of the said slot that is arranged parallelly to a plane extending in the flow direction of the mixture, as well as a second diverging portion 18'', having a length equal to or less than that of the preceding portion 18', delimited by two planar lip surfaces 28 and 29 extending from said wall surfaces 26, 27, and which are diverging each other to form a small angle with respect to said plain containing the cross axis of the slot 18, and which terminate at the outlet edge of the slot itself; consequently, in the example of Figure 3, the diverging lip portion 18'' of the slot is axially aligned with the parallel wall surface portion 18', starting from chamber 17 of the gate bar.

As shown in figure 3, the total width L of the slot 18 may vary significantly from case to case, depending on the characteristics of the polyurethane mixture to be produced and, by way of example, this width L may preferably vary between about 10 to 30 mm; however, values of the width L of the slot 18 greater or less than those indicated above are nevertheless included within the scope of the present invention.

Similarly, the height S of the slot may be comprised, by way of an indication, between 1/10th and 10/10th mm, with optimum values comprised between 3/10th and 7/10th mm, even though slots of different height are possible, depending on the actual dimensions of the frothing device, the throughputs required and the mixing pressure values inside the chamber of the mixing apparatus, to keep the blowing agent in a liquid state.

As initially mentioned, it is necessary to avoid the formation of turbulence conditions in the mixture as it is emerging from the slot 18 and as it flows into the cavity of the diffuser 19 where the frothing process takes place as a result of release of the liquid blowing agent previously mixed with the reactive polyurethane components. In this connection it is advisable that the angle of divergency of the final portion 18'' of the slot, i.e. the angle formed by the two slanted wall lips 28 and 29, should be kept as small as possible. By way of an indication, if X denotes the length of the diverging portion 18'' of the slot and if Y denotes its height at the outlet side or in the region of its maximum point of divergency on the outlet edge of the slot, good results are obtained for lengths X of the diverging portion equal to or greater than 4-5 times the height Y of the slot at its point of maximum divergency.

In the example of Figure 3, both the wall surfaces 28 and 29 which define the diverging section 18'' of the slot are planar and both are forming an angle of some degrees with the cross axis of the slot.

Figure 4 of the drawings shows a second embodiment according to which the diverging lip portion 18'' of the slot is delimited on one side only by a slanted wall surface 30, while on the other side it is delimited by a co-planar wall surface parallel to the cross axis of the slot, which is a continuation of the planar surface 26 of the portion 18' having constant height of the slot. In this case also, the diverging lip portion 18'' may be regarded as being substantially aligned with the portion 18' of the slot which is parallelly arranged to the flow direction, having a constant height.

Figure 5 of the accompanying drawings shows a further embodiment according to which the slot 18 still has a portion 18' parallel to its axis, of greater length than in the previous cases, in which the diverging lip portion 18'' forms an angle, for example of 90° with the preceding portion 18', so as to deviate the flow of the mixture and direct it downwards into the diffuser cavity. This could be obtained for example by adding, at the front side of the gate bar 16, a shaped rod 31 fixed to the top part of the bar 16; the rod 31, furthermore, has on its inner side facing the gate bar 16 a slanted surface 32 which, together with the facing front surface 33 of the bottom part of the bar 16, arranged at right angle to the cross axis of the slot, or slightly inclined rearwardly as schematically indicated by the reference number 34, defines the diverging lip portion 18'' of the slot.

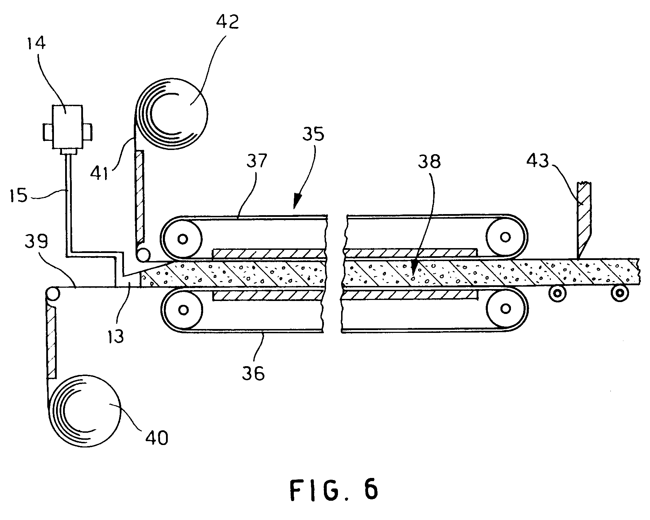

Figure 6 of the drawings shows application of the frothing device 13 according to the present invention to a plant for the production of laminated panels, by frothing rigid polyurethane foam. Briefly, the plant comprises a continuous conveyor 35 consisting of a lower conveyor belt 36 and an upper conveyor belt 37 arranged at a suitable distance from one another so as to define a foaming space 38 having dimensions widthwise and heightwise which correspond to those of the panels to be formed.

A first strip material 39, suitable for defining a bottom layer or an outer bottom face of the panels to be produced, for example a strip of fabric, metal, plastic or other suitable material, is continuously unwound from a roll 40. Correspondingly, a second strip of material 41 on the other upper side of the panel, is continuously unwound from a roll 42, so as to be supplied in a similar manner along the upper conveyor belt 37.

In Figure 6, moreover, 43 denotes a device for cross-wise cutting the panels, while the reference numbers 13 and 14 denote, respectively, the frothing device according to the invention and a high-pressure mixing device; also in Figure 6, the frothing device 13 has the same features as the frothing device in the preceding examples which are illustrated in detail in Figures 2 to 5 of the accompanying drawings.

From the above description and the illustrations with reference to the accompanying drawings it is obvious that the invention relates to a frothing device for the pre-expansion and distribution of polyurethane mixtures containing a low-boiling liquid blowing agent, the basic feature of which consists in the use of a tubular gate bar for distributing the mixture into a frothing cavity, provided on one side with a longitudinal slot through which the polyurethane mixture flows, said slot having a substantially constant height and terminating with diverging end lips opening out into the frothing cavity of a diffuser, inside which the polyurethane mixture is frothed in a homogeneous manner, without any turbulence, owing to the gradual release of the blowing agent, still in a substantially liquid state, foaming in a controlled manner along the entire length of the said device. It is understood, however, that the above description and illustrations with reference to the accompanying drawings have been provided purely by way of a non-limiting example of the general principles of the invention.

## Claims

1. A frothing device for frothing and supplying a polyurethane mixture, from chemically reactive polyurethane components which are mixed under pressure controlled conditions, in metered quantities with a liquid low-boiling blowing agent (CO₂), said frothing device comprising a tubular gate bar (16) defining an elongated pressure-equalizing chamber (17) provided on one side with a longitudinal slot (18), said slot (18) transversely extending in the flow direction of the mixture through the same slot (18) to open out towards the cavity of a lay-down diffuser (19), characterized in that said slot (18) on the side opposite to the pressure equalizing chamber (17) of the gate bar (16), is provided with a widening lip portion (18'') diverging in the flow direction and towards the diffuser cavity (19).

2. A frothing device according to Claim 1, characterized in that said longitudinal slot (18), comprises a first portion (18') of constant height, parallelly extending to the cross axis of the said slot (18), as well as a second diverging lip portion (18'') extending in the flow direction for a length lower than the first portion (18') of said slot (18).

3. A frothing device according to the preceding claim 2, characterized in that said diverging lip portion (18'') of the slot (18) is axially aligned with said first section (18') having constant height.

4. A frothing device according to Claim 1 or Claim 2, characterized in that the said diverging lip portion (18'') of the slot (18) is angularly oriented in respect to the first portion (18') having constant height, of the slot (18).

5. A frothing device according to Claim 4, characterized in that said diverging lip portion (18'') of the slot (18) is downwardly oriented in respect to the gate bar (16).

6. A frothing device according to preceding claim 1, characterized in that said diverging lip portion (18'') of the slot (18) is delimited on both sides by planar wall surfaces (28, 29) which are both slanted with respect to the cross axis of the slot (18).

7. A frothing device according to Claim 1, characterized in that the said diverging lip portion (18'') of the slot (18) is delimited on both sides by planar wall surfaces (26, 30), one of said surfaces forming a co-planar extension of a wall surface (26) of the slot portion (18') having constant height, the other one (30) of said surfaces forming an diverging angle with respect to the cross axis of the slot (18).

8. A frothing device according to any one of the preceding claims, characterized in that the length of the diverging lip portion (18'') of the slot (18), is equal to or greater than four to fives times the height of the same diverging portion (18'') at its extreme point of maximum divergency.

9. A frothing device according to any one of the preceding claims, characterized in that the slot (18) of the tubular gate bar (16) opens out towards the cavity of a diffuser (19) comprising a series of differently oriented wall portions (21-25) to deviate, at one or more points, the flow direction of the mixture emerging from the slot (18) of the said gate bar (16).
